# FASCICULE DE BREVET EUROPEEN

(11) **EP 1 879 676 B1**
(45) Date de publication et mention de la délivrance du brevet: **11.01.2012**
(21) Numéro de dépôt: 06743767.3
(22) Date de dépôt: 05.05.2006
(51) Int. Cl.: B01D 27/08, F01M 11/03

(54) **CARTOUCHE FILTRANTE ET SYSTEME DE MONTAGE D'UNE TELLE CARTOUCHE AVEC DES MOYENS DE DETROMPAGE**
FILTERPATRONE UND MONTAGESYSTEM MIT VERSCHLÜSSELUNG
FILTER CARTRIDGE AND MOUNTING SYSTEM WITH KEYED MOUNTING MEANS

(30) Priorité: 13.05.2005 FR 0504867
(43) Date de publication de la demande: 23.01.2008
(73) Titulaire: FILTRAUTO, 78286 Guyancourt Cedex (FR); Sogefi Filtration Ltd, Llantrisant CF72 8YU (GB)
(72) Inventeur: MULES, Robert, Stephen, CF72 8JF Pontyclun, RCT (GB)
(74) Mandataire: Cabinet Plasseraud
(86) Numéro de dépôt international: PCT/FR2006/001012
(87) Numéro de publication internationale: WO 2006/120326

(56) Documents cités:
- EP-A- 0 442 365
- EP-A- 1 070 530
- DE-A1- 10 201 456
- PATENT ABSTRACTS OF JAPAN vol. 1998, no. 02, 30 janvier 1998 (1998-01-30) & JP 09 267005 A (TENETSUKUSU:KK), 14 octobre 1997 (1997-10-14)
- PATENT ABSTRACTS OF JAPAN vol. 1995, no. 07, 31 août 1995 (1995-08-31) -& JP 07 100307 A (HONDA MOTOR CO LTD; others: 01), 18 avril 1995 (1995-04-18)

## Description

La présente invention se rapporte à un système de filtration comprenant un support de montage (tel qu'un bloc moteur) et une cartouche filtrante s'étendant longitudinalement selon un axe central, la cartouche comportant :
- un premier organe de fixation adapté pour venir en prise avec un deuxième organe de fixation du support,
- une face d'extrémité longitudinale, dans laquelle le premier organe de fixation est réalisé sous forme d'un filetage coaxial à l'axe central et solidaire de la face d'extrémité de la cartouche, le deuxième organe de fixation étant formé par un filetage complémentaire et solidaire du support, les premier et deuxième organes de fixation formant un système de vissage.

Le document WO 01/21276 décrit un système de filtration de ce type. Les éléments filetés sont réalisés par des filetages standard, de sorte que différents types de cartouche peuvent être vissés sur le support d'un bloc moteur donné. Or, pour un moteur donné, la cartouche doit présenter des caractéristiques prédéterminées en fonction notamment du débit, de la pression et de la nature du liquide filtré. Avec les systèmes de montage existant, un utilisateur peut donc monter par inadvertance une cartouche inadaptée au moteur prédéterminé et ainsi entraîner un mauvais fonctionnement du moteur, voire une détérioration de celui-ci.La présente invention vise à pallier les problèmes cités ci-dessus, notamment en limitant la possibilité de monter une cartouche filtrante inadaptée à la filtration adéquate du fluide provenant du support prédéterminé.

A cet effet, la présente invention a pour objet un système de filtration du type précité, caractérisé en ce que la cartouche comporte en outre des premiers moyens de détrompage adaptés pour coopérer avec des deuxièmes moyens de détrompage reliés au support, lors du montage de la cartouche sur ledit support,
et en ce que l'un des premiers ou deuxièmes moyens de détrompage, et de préférence le premier, comprend une échancrure formée dans l'un desdits filetages des premier et deuxième organes de fixation, l'autre des moyens de détrompage comprenant un ergot saillant adapté pour pénétrer l'échancrure.

Ainsi, si l'utilisateur cherche à monter une cartouche qui ne présente pas des premiers moyens de détrompage adaptés pour coopérer avec les deuxièmes moyens de détrompage, la fixation de celle-ci sur le support prédéterminé sera entravée, voire impossible. L'utilisateur se rendra ainsi compte de l'inadaptation de la cartouche grâce au dispositif de détrompage de l'invention.

Dans des modes de réalisation préférés de l'invention, on a recours, en outre, à l'une ou l'autre des dispositions suivantes :
- l'un desdits premier ou deuxième organes de fixation, et de préférence le premier organe de fixation, est un filetage taraudé dans l'épaisseur d'un flasque, l'autre organe de fixation étant un filetage réalisé sur une portion de la surface extérieure d'un mamelon, et l'échancrure appartenant à l'un desdits premiers ou deuxièmes moyens de détrompage est formée par une rainure s'étendant selon l'axe central de part en part du filetage correspondant, l'ergot appartenant à l'autre moyen de détrompage s'étendant radialement vers l'extérieur par rapport à l'axe central ;
- l'ergot est solidaire du mamelon, et est de préférence situé à proximité de l'extrémité libre dudit mamelon, la portion filetée du mamelon étant séparée de l'ergot d'une distance au moins égale à la longueur axiale du filetage taraudé ;

- l'ergot est formé par une broche agencée au travers du mamelon et présentant au moins une extrémité extérieure audit mamelon ;
- la rainure présente un profil transversal prédéterminé et l'ergot adapté pour coopérer avec ladite rainure présente un profil transversal complémentaire ;
- les premiers ou deuxièmes moyens de détrompage comportent au moins deux rainures espacées angulairement d'un angle déterminé, l'autre des moyens de détrompage comportant au moins deux ergots s'étendant selon des directions qui forment entre elles un angle égal audit angle déterminé, afin de pouvoir multiplier le nombre de paires de premiers et deuxièmes moyens de détrompage adaptés pour coopérer ensemble ;
- le flasque portant le filetage taraudé présente sur une face une butée saillante qui s'étend dans le prolongement d'une des faces radiales de la rainure, et dans laquelle une rampe hélicoïdale s'étendant depuis une base jusqu'à un sommet formant ladite butée, est de préférence prévue sur la face du flasque ;
- la face d'extrémité de la cartouche présente au moins un relief qui reçoit et positionne un premier joint annulaire destiné à assurer l'étanchéité entre ladite face d'extrémité et le support, ledit premier joint présentant des bras globalement radiaux s'étendant jusqu'à un deuxième joint annulaire concentrique audit premier joint, qui est également destiné à assurer l'étanchéité entre ladite face d'extrémité et ledit support.

La présente invention se rapporte également à une cartouche filtrante adaptée pour coopérer dans un système de filtration selon l'invention.

D'autres avantages et caractéristiques de la présente invention ressortiront de la description suivante, donnée à titre d'exemple non limitatif, en référence aux figures annexées dans lesquelles :
- la figure 1 est une vue partielle en coupe longitudinale d'une cartouche filtrante selon un premier mode de réalisation de l'invention et d'un support prédéterminé destiné à la recevoir, la cartouche et le support étant séparés l'un de l'autre ;
- la figure 2 est une vue analogue à la figure 1, dans laquelle la cartouche et le support sont partiellement engagés l'un avec l'autre ;
- la figure 3 est une vue analogue à la figure 1, dans laquelle la cartouche est fixée au support ;
- la figure 4 est une vue simplifiée en coupe transversale selon la ligne IV-IV de la figure 3 ;
- la figure 5 est une vue analogue à la figure 4 d'un deuxième mode de réalisation de l'invention ;
- la figure 6 est une vue analogue à la figure 4 d'un troisième mode de réalisation de l'invention ;
- la figure 7 est une vue partielle de la cartouche et du support à l'état assemblé selon une variante du premier mode de réalisation ;
- la figure 8 est une vue en perspective de la cartouche selon la variante du premier mode de réalisation. Sur les différentes figures, on a conservé des références identiques pour désigner les éléments identiques ou similaires.

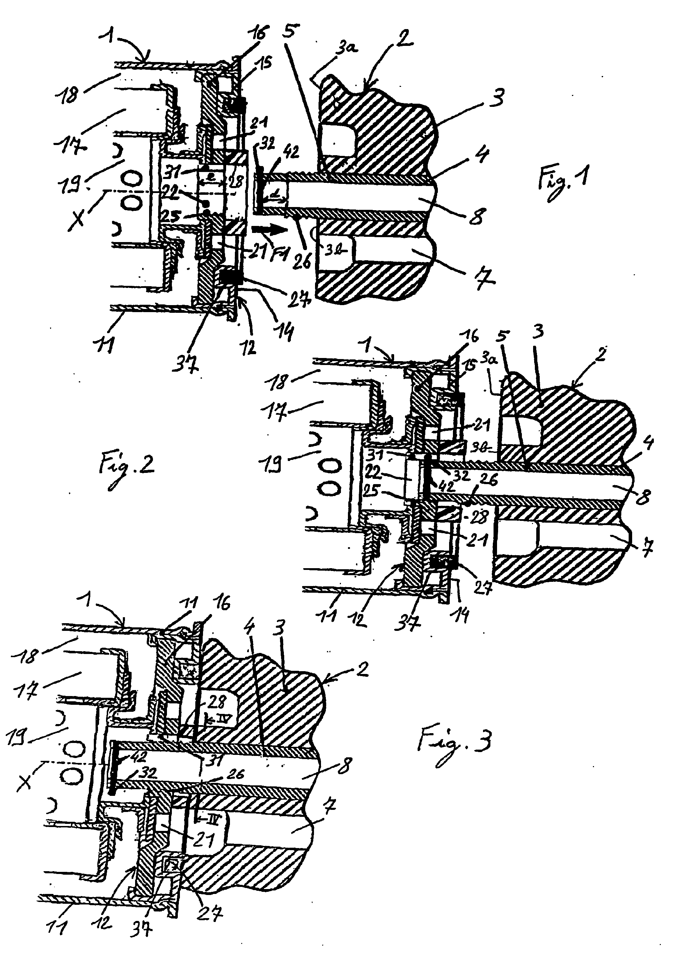

A la figure 1, sont représentés partiellement une cartouche filtrante 1 et un support 2 destiné à recevoir la cartouche filtrante.

Le support 2 est formé, dans le mode de réalisation représenté, d'un bloc moteur 3 de moteur à combustion interne. Le support 2 comprend également un tube 4 emmanché dans le bloc moteur 3 et présentant une portion 5, dénommée ci-après mamelon, qui fait saillie hors du bloc moteur. Le support 2 comprend un premier canal 7 formé dans le bloc moteur 3 et destiné à alimenter la cartouche filtrante 1 en fluide à filtrer. Le support 2 comporte également un deuxième canal 8 formé par le tube 4, qui est destiné à collecter le fluide filtré provenant de la cartouche pour le distribuer au moteur. Le fluide filtré par la cartouche 1 peut être de tout type, mais il s'agit plus particulièrement d'huile de lubrification ou de carburant tel que du gazole.

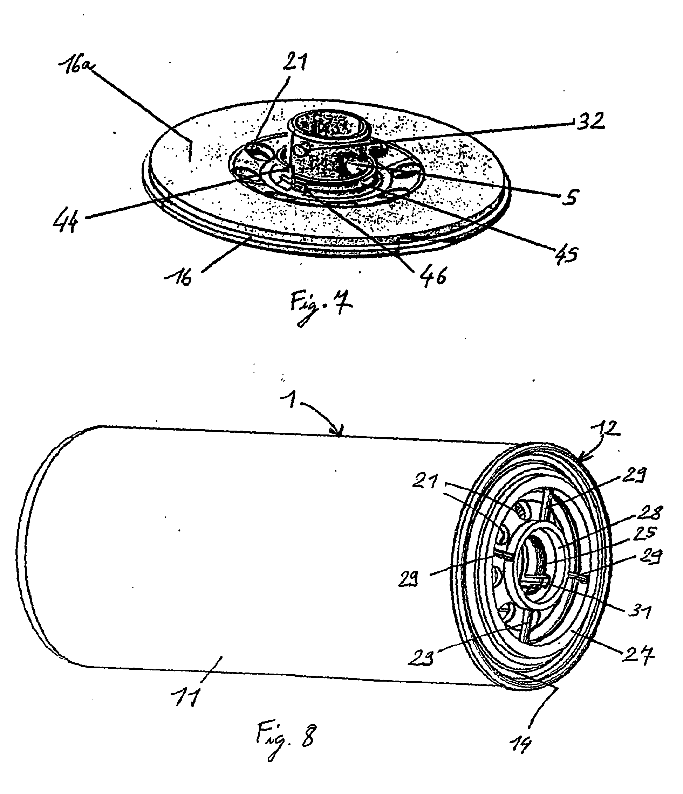

La cartouche filtrante 1 est de type cartouche sertie et comprend de manière connue un boîtier extérieur 11 en forme de godet, comme cela est visible sur la figure 8, qui s'étend longitudinalement selon un axe central X. Le boîtier 11 formé en une pièce métallique présente une section transversale sensiblement circulaire. Toutefois, le boîtier 11 pourrait être réalisé sous toutes formes connues. Le boîtier 11 en forme de godet reçoit sur son ouverture un dispositif de couvercle 12 qui forme une face d'extrémité longitudinale 14 de la cartouche filtrante 1.

Plus particulièrement, dans le mode de réalisation représenté, le dispositif de couvercle 12 comprend une pièce annulaire de liaison 15 fixée par sertissage avec le pourtour intérieur de l'ouverture du boîtier 11 et un flasque 16 qui s'étend en travers de l'ouverture du boîtier 11 et est fixé par rapport à celui-ci par la pièce de liaison 15.

A l'intérieur du boîtier 11 de- la cartouche, est agencé un élément filtrant 17 qui se présente sous forme d'un cylindre disposé coaxialement à l'axe central X. L'élément filtrant 17 délimite à l'intérieur de la cartouche une chambre d'alimentation 18 destinée à recevoir le liquide à filtrer, et une chambre collectrice 19 collectant le liquide après son passage à travers l'élément filtrant 17, c'est-à-dire le liquide filtré.

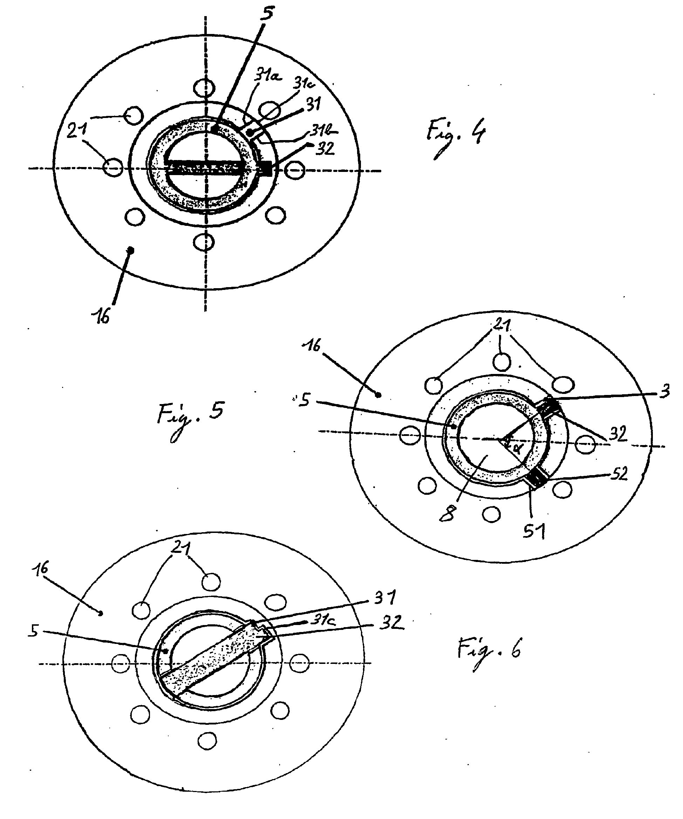

Pour assurer la communication de liquide entre le premier canal 7 et la chambre d'alimentation 18, le flasque 16 comporte une série de perforations 21 servant d'entrées de liquide pour la cartouche filtrante 1, disposées selon un cercle concentrique à l'axe central X, comme on peut le voir aux figures 4 à 6. De manière analogue, le flasque 16 comporte un orifice central 22 pour assurer la communication entre la chambre collectrice 19 et le deuxième canal 8 par lequel le fluide filtré retourne au moteur. Mais, bien entendu, le sens de circulation du fluide pourrait être inversé, la chambre d'alimentation étant alors située au centre de la cartouche 1.

Afin d'assurer la fixation de la cartouche 1 au support 2, le flasque 16 de celle-ci est traversé par un taraudage 25, c'est-à-dire un filetage taraudé dans un trou traversant cylindrique qui correspond, dans le mode de réalisation représenté, à l'orifice central 22. Ce filetage taraudé 25 forme un premier organe de fixation du système de montage de la cartouche 1 sur le support 2, qui est solidaire de la cartouche.

Le support 2 présente un deuxième organe de fixation 26 qui est formé par une portion filetée s'étendant sur une partie de la surface extérieure du mamelon 5. Bien entendu, le filetage 26 du support 2 est complémentaire au filetage 25 de la cartouche 1 pour que ceux-ci viennent en prise par vissage et de manière à ce que la face d'extrémité 14 de la cartouche vienne en butée contre le support 2. On notera la présence d'un premier joint annulaire 27 entourant les orifices 21 et 22. Ce premier joint annulaire 27 est pressé contre la face d'accostage 3a du bloc moteur 3 de manière à assurer l'étanchéité au liquide filtré entre la cartouche filtrante 1 et le support 2.

Les systèmes de montage d'une cartouche sur un support par vissage sont couramment employés et les cartouches de ce type sont généralement dénommées "spin-on". Un tel système de montage par vissage présente différents avantages et notamment un faible coût de réalisation, la possibilité d'obtenir un serrage important pour garantir l'étanchéité tout en réalisant une fixation démontable afin de pouvoir remplacer une cartouche usagée. De plus il ne nécessite pas d'outillage spécifique à chaque type de cartouche. On notera que la structure du premier et du deuxième organe de fixation (25,26) peut être inversée, avec un filetage taraudé réalisé sur le support 2 et un mamelon fileté faisant saillie sur la face d'extrémité 14 de la cartouche, ou encore de prévoir d'autres types de moyens de fixation.

Le système de montage de la cartouche filtrante 1 sur le support 2 comprend en outre un dispositif de détrompage, afin que pour le support prédéterminé 2 associé à un type de moteur donné qui exige un filtre présentant des caractéristiques particulières pour la filtration de l'huile ou du carburant, les possibilités de montage d'une cartouche inadaptée soient réduites, voire impossibles. Le dispositif de détrompage comprend des premiers moyens de détrompage 31 reliés à la cartouche filtrante 1 et des deuxièmes moyens de détrompage 32 reliés au support 2. Les premiers et deuxièmes moyens de détrompage (31, 32) étant adaptés pour coopérer l'un avec l'autre lors du montage de la cartouche 1 sur le support 2 en vue de sa fixation, comme cela sera expliqué plus en détail ci-après.

Dans le mode de réalisation représenté, le premier moyen de détrompage est constitué par une rainure 31 s'étendant longitudinalement selon l'axe central X dans la paroi de l'orifice central 22 qui comporte le filetage taraudé 25, de sorte qu'elle débouche sur chacune des faces du flasque épais 16. Comme on le voit mieux sur la figure 4, la rainure 31 présente un profil creux en forme de "U" délimité par deux faces radiales opposées (31a, 31b) et une face circonférentielle 31c formant la base du "U".

Le deuxième moyen de détrompage est, quant à lui, constitué par un ergot 32 faisant saillie sur la surface radialement extérieure du mamelon 5 et situé à proximité de l'extrémité libre de celui-ci. L'ergot 32 s'étend radialement par rapport à l'axe central X du mamelon. Comme cela apparaît sur la figure 4, l'ergot 32 présente des dimensions, ici un diamètre et une hauteur, qui permettent son passage dans l'échancrure formée par la rainure 31 de la cartouche 1. Comme indiqué sur la figure 1, l'ergot 32 est séparé d'une distance d de la portion filetée 26 du mamelon 5 par une portion tubulaire de diamètre extérieur inférieur au diamètre du sommet du filetage taraudé 25 dans le flasque 16 de la cartouche 1. Le flasque 16 présentant quant à lui une épaisseur e le long de laquelle s'étend le filetage taraudé 25. La distance d est légèrement supérieure à l'épaisseur e.

L'ergot 32 fait partie intégrante d'une broche 42 qui s'étend radialement au travers du mamelon 5 et dont une extrémité libre faisant saillie constitue l'ergot 32. La broche 42 est une simple tige métallique de section circulaire qui forme donc un ergot 32 également de section circulaire pour pénétrer aisément dans la rainure 31. La broche 42 est montée par emmanchement à force dans deux alésages alignés réalisés à travers la paroi du mamelon 5. Ainsi, l'ergot présente une grande solidité et est réalisé par une pièce très simple fixée simplement au support 2. Par conséquent, ce mode de réalisation de l'ergot 32 est particulièrement peu onéreux. Toutefois, il est parfaitement envisageable de réaliser l'ergot du support 2 par une pièce soudée ou emmanchée dans un trou borgne du mamelon 5, ou encore intégralement formée avec celui-ci par moulage, notamment si l'on recherche à minimiser les pertes de charge dans le deuxième canal 8.

Pour réaliser la fixation de la cartouche filtrante 1 sur le support prédéterminé 2, l'utilisateur amène la cartouche en effectuant un mouvement de translation selon la flèche F1 de manière à ce que l'orifice central 22 soit coaxial au mamelon 5 du support et orienté angulairement de manière à ce que la rainure 31 vienne en correspondance avec l'ergot 32. Si la correspondance n'est pas parfaite, on notera qu'il est naturel pour l'utilisateur d'effectuer une rotation de la cartouche lorsque l'ergot 32 est en contact avec le pourtour de l'ouverture centrale 22 jusqu'à ce que l'ergot 32 s'engage dans cette rainure 31. Du fait de la forme adaptée pour coopérer des premiers et deuxièmes moyens de détrompage, l'ergot 32 peut coulisser librement le long de la rainure 31, comme cela est représenté sur la figure 2, jusqu'à ce qu'il soit situé dans la chambre collectrice 19 de la cartouche. Ainsi, en effectuant un pur mouvement de translation, le mamelon 5 qui porte à la fois les deuxièmes moyens de détrompage 32, le deuxième organe de fixation 26 et le deuxième canal 8 du support prédéterminé 2, est engagé à travers l'orifice central 22 qui forme, quant à lui, les premiers moyens de détrompage 31, le premier organe de fixation 25 et la sortie de la cartouche 1. A la fin de ce mouvement de translation, le filetage 26 du mamelon 5 vient en contact avec le filetage taraudé 25 et le montage de la cartouche est poursuivi en effectuant le mouvement de visage habituel des cartouches de type "spin-on" jusqu'à obtenir un serrage de la face d'extrémité 14 contre la face d'accostage 3a du bloc moteur, comme représenté sur la figure 3. On notera que du fait de la distance d supérieure à l'épaisseur e, l'ergot 32 n'est plus engagé dans la rainure 31 lorsqu'on doit amorcer le mouvement de vissage.

Les deuxièmes moyens de détrompage 32 liés au support prédéterminés 2 limitent fortement la possibilité de montage d'une cartouche inadaptée, comme par exemple le montage d'une cartouche destinée à filtrer du gasoil sur un support formant une sortie d'huile de lubrification.

Pour démonter la cartouche 1, on desserre celle-ci, notamment à l'aide d'une clé à chaîne, on dévisse celle-ci jusqu'à ce que le filet 26 du mamelon 5 soit désengagé du filet taraudé 25 de la cartouche, de manière habituelle. Ensuite, il suffit d'orienter angulairement la cartouche 1 par rapport au support pour que l'ergot 32 vienne en correspondance avec la rainure 31, pour que la cartouche puisse être complètement détachée du support par un mouvement de translation de sens opposé à la flèche F1.

Afin de faciliter l'amenée en correspondance de l'ergot 32 et de la rainure 31 lors du démontage de la cartouche, il est possible de prévoir une butée 44 sur la face interne 16a du flasque 16, comme cela apparaît sur la variante du premier mode de réalisation représenté à la figure 7. Cette butée 44 d'indexation angulaire de la position de la cartouche, est formée par une rampe 45 dont une extrémité s'étend dans le prolongement d'un côté latéral 31a de la rainure 31. Ainsi, lorsque l'ergot 32 vient contre la butée 44, l'ergot 32 est en correspondance avec la rainure 31 et le filtre 1 peut être désengagé du support 2 par un pur mouvement de translation.

Afin de faciliter encore le démontage, la rampe 45 est une rampe hélicoïdale s'étendant le long du pourtour interne de l'ouverture centrale 22 depuis un sommet constituant la butée 44 jusqu'à une base 46 située à proximité de la face interne 16a du flasque et à proximité de l'autre côté latéral 31 de la rainure. Ainsi, lorsque les filetages (25, 26) ne sont plus en prise, l'ergot 32 vient en appui contre le sommet de la rampe hélicoïdale 45 et du fait de la traction exercée sur la cartouche, celle-ci est sollicitée par la coopération d'un ergot 32 avec la rampe 45 pour effectuer une rotation amenant l'ergot 32 en correspondance avec la rainure 31. On notera qu'il est parfaitement envisageable de prévoir une rampe hélicoïdale analogue qui forme une butée, sur la face extérieure du flasque 16 afin de faciliter également la mise en correspondance de l'ergot 32 avec la rainure 31 lors du montage de la cartouche 1.

Dans le but de limiter au maximum les possibilités de montage d'une cartouche inadaptée sur le support 2, il est préférable que le deuxième organe de détrompage lié au support prédéterminé 2 soit un ergot 32. En effet, si le support prédéterminé comporte des deuxièmes moyens de détrompage réalisés sous forme d'une échancrure, il reste des possibilités pour monter des cartouches existantes dépourvues de tout moyen de détrompage réalisé sous forme d'un ergot saillant.

Afin de multiplier le nombre de types de support prédéterminés pouvant recevoir des cartouches adaptées uniquement à un type donné de support prédéterminé, il est avantageux de prévoir différentes configurations des premiers et deuxièmes moyens de détrompage.

Dans un deuxième mode de réalisation représenté à la figure 5, les premiers moyens de détrompage de la cartouche sont constitués par deux rainures (31, 51), chacune analogue à la rainure 31 du premier mode de réalisation, qui sont espacées angulairement l'une de l'autre d'un angle déterminé α, ici sensiblement égal à 80 degrés. Les deuxièmes moyens de détrompage solidaires du mamelon 5 du support 2 sont constitués par deux ergots (32,52) respectivement adaptés pour coopérer avec les deux rainures (31, 51), ces ergots s'étendant radialement selon des directions qui forment un angle entre elles égal à l'angle α séparant les rainures (31,51). Ainsi, en modifiant l'angle α et éventuellement en modifiant les dimensions des ergots et des rainures, il est possible de réaliser un grand nombre de couples de premiers et deuxièmes moyens de détrompage qui correspondent chacun à des caractéristiques de filtration déterminées. Toutefois, dans le cas d'une pluralité d'ergots, il est préférable de ne pas réaliser ceux-ci à l'aide de broches traversant le mamelon afin de limiter les pertes de charge dans le canal formé par celui-ci. On notera que le fait de prévoir deux ergots (32,52), ou plus, interdit le montage d'une cartouche ne comportant qu'une rainure 31.

Une autre solution pour multiplier le nombre de couples de premiers et deuxièmes moyens de détrompage adaptés pour coopérer entre eux, est représentée schématiquement à la figure 6. Dans ce troisième mode de réalisation, l'orifice central 22 ne comporte qu'une seule rainure 31, mais celle-ci a une section transversale présentant un profil particulier avec une paroi circonférentielle 31c formant le fond de la rainure qui présente un décrochement. L'ergot 32 du mamelon 5 présente un profil correspondant à celui de la rainure 31 de manière à pouvoir coulisser librement le long de celle-ci. On forme ainsi un système de clé et de serrure entre l'ergot et la rainure qui permet de multiplier encore le nombre de couples de premiers et deuxièmes moyens de détrompage.

La coopération du filetage taraudé 25 avec le filetage 26 est généralement suffisamment étanche à l'huile. Mais la présence de la rainure 31 crée un passage plus ou moins important pour le liquide à filtrer au niveau du filetage taraudé 25. On peut donc prévoir des moyens d'étanchéité à ce niveau, comme dans le cas des filtres à gasoil. Mais la rainure 31 peut aussi être partiellement obstruée par un élément de masquage, comme une lèvre élastique ou une surface d'abutement du support 2 qui vient en appui contre le pourtour de l'orifice central 22.

Dans le premier mode de réalisation représenté aux figures 1 à 3, et sa variante représentée à la figure 8, un un deuxième joint d'étanchéité 28 assure l'étanchéité entre l'orifice de sortie 22 et le deuxième canal 8 en étant comprimé entre le pourtour extérieur de l'ouverture centrale 22 et la portion du bloc moteur 3b qui entoure la base du mamelon 5. Le deuxième joint peut être maintenu sur la cartouche 1 par tout moyen connu.

Toutefois, il est avantageux de positionner ce deuxième joint d'étanchéité 28 à l'aide de bras radiaux 29 s'étendant entre le premier 27 et le deuxième 28 joints d'étanchéités, qui sont visibles sur la variante représentée à la figure 8. Les bras radiaux 29 permettent de centrer le deuxième joint 28 par rapport à l'orifice de sortie 22 sans prévoir de moyens particuliers sur la face extérieure du flasque 16. En effet, le premier joint d'étanchéité 27 est maintenu en position par son engagement partiel dans une rainure annulaire 37 formée dans la pièce de liaison 15. Mais il n'est pas nécessaire de prévoir un relief supplémentaire dans le flasque 16 pour maintenir le deuxième joint 28 en position, étant donné que celui-ci est maintenu par les bras radiaux 29. On notera que l'on obtient un positionnement suffisamment rigide, même en formant les premier et deuxième joints (27,28) et les bras radiaux 29 en une seule pièce d'élastomère.

Les différents modes de réalisation décrits ci-dessus ne sont nullement limitatifs, et il est notamment possible de combiner les caractéristiques des différents modes de réalisation et de leur variante, ainsi que de réaliser des organes de fixation et des moyens de détrompage de structure sensiblement différente.

## Revendications

1. Système de filtration comprenant un support (2) de montage et une cartouche filtrante (1) s'étendant longitudinalement selon un axe central (X), la cartouche comportant :
- un premier organe de fixation (25) adapté pour venir en prise avec un deuxième organe de fixation (26) du support, et
- une face (14) d'extrémité longitudinale, dans laquelle le premier organe de fixation (25) est réalisé sous forme d'un filetage coaxial à l'axe central (X) et solidaire de la face d'extrémité (14) de la cartouche, le deuxième organe de fixation (26) étant formé par un filetage complémentaire et solidaire du support (2), lesdits premier et deuxième organes de fixation (25, 26) formant un système de vissage,
**caractérisé en ce que** ladite cartouche présente en outre des premiers moyens de détrompage (31,51) adaptés pour coopérer avec des deuxièmes moyens de détrompage (32,52) reliés au support (2), lors du montage de la cartouche sur ledit support,
et **en ce que** l'un des premiers ou deuxièmes moyens de détrompage, et de préférence le premier, comprend une échancrure (31) formée dans l'un desdits filetages des premier et deuxième organes de fixation, l'autre des moyens de détrompage comprenant un ergot saillant (32) adapté pour pénétrer l'échancrure (31).

2. Système de filtration selon la revendication 1, dans lequel l'un desdits premier ou deuxième organe de fixation, et de préférence le premier organe de fixation, est un filetage (25) taraudé dans l'épaisseur d'un flasque (16), l'autre organe de fixation étant un filetage (26) réalisé sur une portion de la surface extérieure d'un mamelon (5), et dans laquelle l'échancrure (31) appartenant à l'un desdits premiers ou deuxièmes moyens de détrompage est formée par une rainure s'étendant selon l'axe central (X) de part en part du filetage correspondant (25), l'ergot (32) appartenant à l'autre des moyens de détrompage s'étendant radialement vers l'extérieur par rapport à l'axe central (X).

3. Système de filtration selon la revendication 2, dans lequel l'ergot (32) est solidaire du mamelon (5), et est de préférence situé à proximité de l'extrémité libre dudit mamelon, le filetage (26) du mamelon étant séparé de l'ergot (32) d'une distance (d) au moins égale à la longueur axiale (e) du filetage taraudé (25).

4. Système de filtration selon la revendication 2 ou 3, dans lequel l'ergot (32) est formé par une broche (42) agencée au travers du mamelon (5) et présentant au moins une extrémité extérieure audit mamelon.

5. Système de filtration selon l'une quelconque des revendications 2 à 4, dans lequel la rainure (31) présente un profil transversal prédéterminé et l'ergot (32) adapté pour coopérer avec ladite rainure (31) présente un profil transversal complémentaire.

6. Système de filtration selon l'une quelconque des revendications 2 à 5, dans laquelle les premiers ou deuxièmes moyens de détrompage comportent au moins deux rainures (31,51) espacées angulairement d'un angle déterminé (α), l'autre des moyens de détrompage comportant au moins deux ergots (32,52) s'étendant selon des directions qui forment entre elles un angle égal audit angle déterminé.

7. Système de filtration selon l'une quelconque des revendications 2 à 6, dans laquelle le flasque (16) portant le filetage taraudé (25) présente sur une face une butée saillante (44) qui s'étend dans le prolongement d'une des faces radiales (31a) de la rainure (31), et dans laquelle une rampe hélicoïdale (45) s'étendant depuis une base jusqu'à un sommet formant ladite butée, est de préférence prévue sur la face du flasque (16).

8. Système de filtration selon les revendications 1 à 7, dans laquelle la face d'extrémité (14) de la cartouche (1) présente au moins un relief (47) qui reçoit et positionne un premier joint annulaire (27) destiné à assurer l'étanchéité entre ladite face d'extrémité et le support (2), ledit premier joint présentant des bras globalement radiaux (29) s'étendant jusqu'à un deuxième joint annulaire (28) concentrique audit premier joint.

9. Système de filtration selon une des revendications 1 à 8, dans lequel le support (2) est de préférence solidaire d'un bloc (3) de moteur à combustion interne et la cartouche filtrante (1) est adaptée pour filtrer de l'huile ou du carburant.

10. Cartouche filtrante (1), adaptée pour coopérer dans un système de filtration selon la revendication 1.

## Claims

1. Filtration system comprising a mounting support (2) and a filter cartridge (1) that extends longitudinally along a central axis (X), the cartridge comprising:
- a first attachment device (25) adapted to come into contact with a second attachment device (26) of the support, and
- a longitudinal end face (14), in which the first attachment device (25) is made in the form of a thread coaxial with the central axis (X) and fixed to the end face (14) of the cartridge, the second attachment device (26) being formed by a complementary thread fixed to the support (2), said first and second attachment devices (25, 26) forming a screwing system,
**characterised in that** said cartridge further comprises first foolproofing means (31, 51) designed to cooperate with second foolproofing means (32, 52) connected to the support (2) when the cartridge is mounted on the said support,
and **in that** either the first or second foolproofing means and preferably the first comprises a recess (31) formed in one of said threads of the first and second attachment devices, and the other of the foolproofing means comprises a projecting pin (32) adapted to penetrate into the recess (31).

2. Filtration system according to claim 1, in which one the said first or the said second attachment device and preferably the first attachment device is a thread (25) tapped within the thickness of an end plate (16), the other attachment device being a thread (26) made on a portion of the outside surface of a nipple (5), and in which the recess (31) belonging to either of the said first or the said second foolproofing means is formed by a groove extending along the central axis (X) on each side of the corresponding thread (25), the pin (32) belonging to the other foolproofing means extending radially outwards from the central axis (X).

3. Filtration system according to claim 2, in which the pin (32) is fixed to the nipple (5), and is preferably located close to the free end of the said nipple, the thread (26) of the nipple being separated from the pin (32) by a distance (d) equal to at least the axial length (e) of the tapped thread (25).

4. Filtration system according to claim 2 or 3, in which the pin (32) is formed by a spindle (42) arranged through the nipple (5) and with at least one end outside the said nipple.

5. Filtration system according to any one of claims 2 to 4, in which the groove (31) has a predetermined transverse profile and the pin (32) adapted to cooperate with the said groove (31) has a complementary transverse profile.

6. Filtration system according to any one of claims 2 to 5, in which the first or second foolproofing means comprise at least two grooves (31, 51) at an angular offset by a determined angle (α), the other of the foolproofing means comprising at least two pins (32, 52) extending along directions that together form an angle equal to the said determined angle.

7. Filtration system according to any one of claims 2 to 6, in which the end plate (16) supporting the tapped thread (25) has a projecting stop (44) on one face that extends along the prolongation of one of the radial faces (31a) of the groove (31), and in which there is a helical ramp (45) extending from a base as far as a top part forming the said stop, preferably provided on the face of the end plate (16).

8. Filtration system according to one of claims 1 to 7, in which the end face (14) of the cartridge (1) has at least one relief (47) that receives and positions a first annular seal (27) that will make the seal between the said end face and the support (2), the said first seal having globally radial arms (29) extending as far as a second annular seal (28) concentric with the said first seal.

9. Filtration system according to one of claims 1-8, in which the support (2) is preferably fixed to an engine block (3) of an internal combustion engine and the filter cartridge (1) is adapted to filter oil or fuel.

10. Filtering cartridge (1), adapted to cooperate in a filtration system according to claim 1.

## Patentansprüche

1. Filtersystem, umfassend eine Montagestütze (2) und eine Filterpatrone (1), die sich längs entlang einer Mittelachse (X) erstreckt, wobei die Patrone Folgendes umfasst:
- ein erstes Befestigungselement (25), das dazu geeignet ist, mit einem zweiten Befestigungselement (26) der Stütze in Eingriff zu gelangen, und
- eine Längsendfläche (14), wobei das erste Befestigungselement (25) in Form eines zur Mittelachse (X) koaxialen und mit der Endfläche (14) der Patrone verbundenen Gewindes ausgeführt ist, wobei das zweite Befestigungselement (26) von einem komplementären und mit der Stütze (2) verbundenen Gewinde gebildet ist, wobei das erste und das zweite Befestigungselement (25, 26) ein Schraubsystem bilden,
**dadurch gekennzeichnet, dass** die Patrone ferner erste Unverwechselbarkeitsmittel (31, 51) aufweist, die geeignet sind, mit zweiten Unverwechselbarkeitsmitteln (32, 52), die mit der Stütze (2) verbunden sind, bei der Montage der Patrone auf der Stütze zusammenzuwirken,
und dass eines der ersten oder zweiten Unverwechselbarkeitsmittel, und vorzugsweise das erste, einen bogenförmigen Ausschnitt (31) umfasst, der in einem der Gewinde der ersten und zweiten Befestigungselemente ausgebildet ist, wobei das andere der Unverwechselbarkeitsmittel einen vorspringenden Haken (32) umfasst, der dazu geeignet ist, in den bogenförmigen Ausschnitt (31) einzudringen.

2. Filtersystem nach Anspruch 1, bei dem eines der ersten oder zweiten Befestigungselemente, und vorzugsweise das erste Befestigungselement, ein Gewinde (25) ist, das in der Dicke eines Flansches (16) geschnitten ist, wobei das andere Befestigungselement ein Gewinde (26) ist, das auf einem Abschnitt der Außenseite eines Nippels (5) ausgeführt ist, und bei dem der bogenförmige Ausschnitt (31), der zu einem der ersten oder zweiten Unverwechselbarkeitsmittel gehört, von einer Nut gebildet ist, die sich entlang der Mittelachse (X) beiderseits des entsprechenden Gewindes (25) erstreckt, wobei sich der zum anderen der Unverwechselbarkeitsmittel gehörende Haken (32) radial nach außen in Bezug zur Mittelachse (X) erstreckt.

3. Filtersystem nach Anspruch 2, bei dem der Haken (32) mit dem Nippel (5) verbunden ist und sich vorzugsweise in der Nähe des freien Endes des Nippels befindet, wobei das Gewinde (26) des Nippels von dem Haken (32) um einen Abstand (d) mindestens gleich der Axiallänge (e) des Gewindes (25) getrennt ist.

4. Filtersystem nach Anspruch 2 oder 3, bei dem der Haken (32) von einer Spindel (42) gebildet ist, die quer über den Nippel (5) angeordnet ist und mindestens ein zum Nippel außen liegendes Ende aufweist.

5. Filtersystem nach einem der Ansprüche 2 bis 4, bei dem die Nut (31) ein vorbestimmtes Querprofil aufweist, und der Haken (32), der dazu geeignet ist, mit der Nut (31) zusammenzuwirken, ein komplementäres Querprofil aufweist.

6. Filtersystem nach einem der Ansprüche 2 bis 5, bei dem das erste oder das zweite Unverwechselbarkeitsmittel mindestens zwei Nuten (31, 51) umfasst, die winkelig um einen bestimmten Winkel (α) beabstandet sind, wobei das andere der Unverwechselbarkeitsmittel mindestens zwei Haken (32, 52) umfasst, die sich in Richtungen erstrecken, die zwischen sich einen Winkel gleich dem bestimmten Winkel bilden.

7. Filtersystem nach einem der Ansprüche 2 bis 6, bei dem der Flansch (16), der das Gewinde (25) trägt, auf einer Seite einen vorspringenden Anschlag (44) aufweist, der sich in der Verlängerung einer der Radialflächen (31 a) der Nut (31) erstreckt, und bei dem eine spiralförmige Rampe (45), die sich von einer Basis bis zu einer den Anschlag bildenden Spitze erstreckt, vorzugsweise auf der Fläche des Flansches (16) vorgesehen ist.

8. Filtersystem nach einem der Ansprüche 1 bis 7, bei dem die Endfläche (14) der Patrone (1) mindestens eine Erhebung (47) aufweist, die eine erste Ringdichtung (27), die dazu bestimmt ist, die Dichtigkeit zwischen der Endfläche und der Stütze (2) zu gewährleisten, aufnimmt und positioniert, wobei die erste Dichtung global radiale Arme (29) aufweist, die sich bis zu einer zweiten Ringdichtung (28), die zur ersten Dichtung konzentrisch ist, erstrecken.

9. Filtersystem nach einem der Ansprüche 1 bis 8, bei dem die Stütze (2) vorzugsweise mit einem Verbrennungsmotorblock (3) verbunden ist, und die Filterpatrone (1 ) dazu geeignet ist, Öl oder Treibstoff zu filtern.

10. Filterpatrone (1), die dazu geeignet ist, in einem Filtersystem nach Anspruch 1 zusammenzuwirken.
